# EUROPÄISCHE PATENTANMELDUNG

(11) **EP 1 215 465 A1**
(43) Veröffentlichungstag der Anmeldung: **19.06.2002**
(21) Anmeldenummer: 01127761.3
(22) Anmeldetag: 21.11.2001
(51) Int. Cl.: G01B 11/16, G01B 9/02, G01J 9/02, G01M 17/02

(54) **Verfahren und Vorrichtung zur Erfassung der Verformung von Objekten**

(30) Priorität: 29.11.2000 DE 10058887; 11.01.2001 DE 10101057
(71) Anmelder: Steinbichler Optotechnik Gmbh, 83115 Neubeuern (DE)
(72) Erfinder: Steinbichler, Hans, Dr., 83115 Neubeuern (DE); Rasenberger, Volker, 83064 Raubling (DE); Huber, Rainer, 83451 Piding (DE); Berger, Roman, 83530 Schnaitsee (DE)
(74) Vertreter: Zinnecker, Armin, Dipl.-Ing.

(57) **Zusammenfassung**

Ein Verfahren dient zur Erfassung der Verformung von Objekten (1). Um eine zuverlässige Auswertung auch bei größeren Verformungen zu ermöglichen wird während der Verformung des Objekts (1) eine Folge bzw. Serie von Bildern des Objekts mit einem Meßverfahren aufgenommen. Die Differenz zwischen zwei aufeinanderfolgenden Bildern wird gebildet. Diese Differenzen werden aufsummiert (Fig. 1).

## Beschreibung

Die Erfindung betrifft ein Verfahren zur Erfassung der Verformung von Objekten und eine Vorrichtung zur Durchführung eines derartigen Verfahrens.

Verfahren und Vorrichtungen dieser Art werden zu vielfältigen Zwecken verwendet, insbesondere bei der zerstörungsfreien Werkstoffprüfung, insbesondere von Verbundwerkstoffen, und bei der Prüfung von Reifen (Kraftfahrzeugreifen). Dabei wird ein Objekt, also beispielsweise ein Werkstoff, Verbundwerkstoff, Werkstück, Reifen oder dergleichen verformt, was durch Druck, Unterdruck, Wärme oder auf andere Weise geschehen kann. Das Objekt wird in verschiedenen Verformungszuständen gemessen. Anhand der Messungen kann festgestellt werden, ob das Objekt einen Fehler, insbesondere eine Fehlstelle, aufweist.

Bei der Reifenprüfung kann der Reifen in eine Unterdruckkammer eingelegt werden. Der Reifen kann dabei auf einer Felge montiert sein oder ohne Felge in die Unterdruckkammer gelegt werden. Bei einer Absenkung des Drucks führt die in einer Fehlstelle des Reifens eingeschlossene Luft zu einer lokalen Ausdehnung, die durch die Messung erkannt werden kann.

Ein Verfahren zur Messung der Oberfläche eines räumlichen Körpers ist aus der EP 419 936 B1 bekannt. Nach diesem Verfahren kann ein Objekt mit kohärenter Strahlung, insbesondere Laserlicht, bestrahlt werden. Die reflektierte Strahlung wird von einer Abbildungsoptik in eine Bildebene abgebildet, in der sich ein flächenhafter Sensor bzw. ein Bildsensor befindet, vorzugsweise ein CCD-Sensor. Auf den Sensor wird eine Referenzstrahlung mit einer Trägerfrequenz überlagert. Dabei wird die Abbildungsoptik derart ausgebildet bzw. eingestellt, daß das Bild eines durch die kohärente Strahlung auf dem Körper erzeugten Speckles in der Bildebene mindestens drei Sensorelemente (Pixel) überdeckt. Hierdurch ist gewährleistet, daß mit einer einzigen Aufnahme eine vollständige Phasenmessung möglich ist. Aus den Intensitätssignalen der Sensorelemente wird die Phase der Strahlung von dem Objekt bestimmt.

Bei den vorbekannten Verfahren zur Erfassung der Verformung von Objekten können sich Schwierigkeiten ergeben, wenn die Verformungen verhältnismäßig groß sind. In diesem Fall können die Abstände zwischen verschiedenen Interferenzlinien sehr klein werden, so daß sie nur noch mit Schwierigkeiten oder überhaupt nicht mehr unterschieden werden können, wodurch die Auswertung erschwert oder unmöglich gemacht wird.

Aufgabe der Erfindung ist es, ein Verfahren und eine Vorrichtung der eingangs angegebenen Art vorzuschlagen, die eine zuverlässige Auswertung auch bei größeren Verformungen ermöglichen.

Erfindungsgemäß wird diese Aufgabe bei einem Verfahren der eingangs angegebenen Art durch die Merkmale des Anspruchs 1 gelöst. Während der Verformung des Objekts wird eine Folge bzw. Serie von Bildern des Objekts mit einem Meßverfahren aufgenommen. Es wird die Differenz zwischen zwei aufeinanderfolgenden Bildern gebildet, die dem ersten Bild hinzuaddiert wird. In der weiteren Folge der Durchführung des Verfahrens werden die Differenzen zwischen jeweils zwei aufeinanderfolgenden Bildern gebildet, und diese Differenzen werden jeweils dem vorangegangenen Bild hinzuaddiert. Auf diese Weise werden die Differenz-Verformungen aufaddiert, also integriert. Die aufaddierten Differenzen ergeben die Gesamtverformung des Objekts.

Nach dem erfindungsgemäßen Verfahren werden verhältnismäßig viele Bilder pro Zeiteinheit aufgenommen. In der praktischen Anwendung ist es möglich, die Bilder mit der üblichen Videotaktfrequenz von 25 Vollbildern pro Sekunde aufzunehmen.

Es ist aber auch möglich, andere Bildfrequenzen zu verwenden. Bei langsamen Verformungen können Bildfrequenzen von einem Bild pro Minute oder noch geringere Bildfrequenzen eingesetzt werden. Es ist allerdings auch möglich, die Bilder mit höheren Frequenzen von bis zu einer Million Bildern pro Sekunde aufzunehmen.

Dabei wird ein bestimmtes Bild als Ausgangsbild verwendet. Anschließend werden die Differenzen von je zwei aufeinanderfolgenden Bildern berechnet und sukzessive aufaddiert. Da verhältnismäßig viele Bilder pro Zeiteinheit aufgenommen werden, unterscheiden sich diese Bilder nur um eine jeweils verhältnismäßig kleine Verformung voneinander. Die Bilder werden während der Aufbringung der Belastung, also während der voranschreitenden Verformung, aufgenommen. Da verhältnismäßig viele Bilder pro Zeiteinheit aufgenommen werden, sind die Interferenzlinien bzw. Projektionslinien weit genug voneinander entfernt, um stets sicher ausgewertet werden zu können. Die Differenz-Verformungen werden aufaddiert, also integriert. Auf diese Weise können auch große Verformungen erfaßt werden.

Vorteilhafte Weiterbildungen sind in den Unteransprüchen beschrieben.

Die Bilder des Objekts können mit einem Interferometrie-Verfahren aufgenommen werden. Geeignete Interferometrie-Verfahren sind beispielsweise die holographische Interferometrie, die elektronische Speckle-Pattern-Interferometrie (ESPI) oder die Speckle-Shearing-Interferometrie. Die Bilder des Objekts können allerdings auch mit einem Projektionsverfahren aufgenommen werden. In Betracht kommen insbesondere ein Gitterprojektionsverfahren oder ein Moiré-Verfahren.

Aus den aufgenommenen Bildern können Phasenbilder ermittelt werden. In diesem Fall werden die Differenzen zwischen aufeinanderfolgenden Phasenbildern gebildet und werden diese Differenzen dem jeweils vorangehenden Phasenbild hinzuaddiert. Die Ermittlung der Phasenbilder kann beispielsweise nach dem Verfahren der EP 419 936 B1, auf die hiermit ausdrücklich Bezug genommen wird, erfolgen. Nach diesem Verfahren wird das Phasenbild aus dem Bild auf dem CCD-Sensor ermittelt, und zwar, wie oben bereits erläutert, derart, daß das Phasenbild aus einem einzigen Bild ermittelt wird. Aus den unmittelbar aufgenommenen Verformungsbildern oder Interferenzlinienbildern werden Phasenbilder berechnet, die dann - durch die beschriebene Differenzbildung und Aufaddierung - ausgewertet werden. Wenn das jeweilige Phasenbild aus einem einzigen Bild ermittelt wird, wie dies nach der EP 419 936 B1 geschehen kann, kann das Verfahren erheblich beschleunigt werden. Es kann mit der üblichen Videotaktfrequenz durchgeführt werden.

Es ist möglich, ein demoduliertes Phasenbild zu ermitteln und auszuwerten.

Eine weitere vorteilhafte Weiterbildung ist dadurch gekennzeichnet, daß das Objekt mit kohärenter Strahlung bzw. kohärentem Licht, vorzugsweise Laserlicht, oder mit teilkohärenter Strahlung bzw. teilkohärentem Licht bestrahlt wird. Insbesondere kann das Objekt von einer Laserdiode bestrahlt werden. Nach einer weiteren vorteilhaften Weiterbildung wird das Objekt von mehreren Laserdioden bestrahlt. Die Verwendung von einer oder mehreren Laserdioden ist insbesondere deshalb vorteilhaft, weil Laserdioden verhältnismäßig kostengünstig sind. Bei der Verwendung von mehreren Laserdioden kann die Anordnung derart getroffen werden, daß sich die Ausleuchtungsbereiche der Laserdioden nicht überlappen bzw. nur geringfügig in Randbereichen überlappen. Es ist allerdings auch möglich, die Anordnung derart zu treffen, daß sich die Ausleuchtungsbereiche von zwei oder mehreren oder allen Laserdioden überlappen.

Ein besonderer Vorteil des erfindungsgemäßen Verfahrens liegt darin, daß die Bilder bzw. Phasenbilder des Objekts von einem handgehaltenen Sensor aufgenommen werden können. Der für das Meßverfahren verwendete Sensor bzw. ein Gehäuse, in dem dieser Sensor angeordnet ist, kann also von Hand gehalten werden. Hierdurch werden zwar Störungen erzeugt. Diese Störungen, die dadurch verursacht werden, daß der von Hand gehaltene Sensor niemals vollständig ruhig gehalten werden kann, werden jedoch durch die verhältnismäßig hohe Bildfrequenz im zeitlichen Verlauf kompensiert. Bei hinreichend schneller Einzelbildfolge ist es dementsprechend möglich, einen handgeführten Sensor, beispielsweise einen handgeführten ESPI-Sensor oder Shearing-Sensor, zu verwenden, insbesondere in Verbindung mit einer elektronischen Verwacklungsunterdrückung. Dabei wird vorausgesetzt, daß die Bildfrequenz so hoch ist, daß die durch das Halten des Sensors von Hand erzeugten Störungen im Verhältnis dazu klein sind. Das Zittern der Hand, aber auch andere Störungen, die von außen eingeführt werden und die auch bei einem festen Meßaufbau entstehen können, können im zeitlichen Verlauf ausgemittelt werden.

Eine weitere vorteilhafte Weiterbildung ist dadurch gekennzeichnet, daß ein gestörtes Bild bzw. Phasenbild bei der Auswertung nicht berücksichtigt wird. Die Auswertung des Bildes bzw. Phasenbildes erfolgt in der oben angegebenen Weise dadurch, daß die Differenz zwischen zwei aufeinanderfolgenden Bildern bzw. Phasenbildern gebildet wird und daß diese Differenz dann dem jeweils vorangegangenen Bild bzw. Phasenbild hinzuaddiert wird. Wenn ein Bild bzw. Phasenbild oder die Differenz, die daraus gebildet worden ist, gestört ist, wird das Bild bzw. Phasenbild bzw. die Differenz nach der vorteilhaften Weiterbildung bei der Auswertung nicht berücksichtigt.

Ein derartiges gestörtes Bild bzw. Phasenbild bzw. eine derartige gestörte Differenz kann insbesondere bei der Verwendung von Laserdioden entstehen. Laserdioden führen sogenannte Modensprünge aus. Hierbei handelt es sich um sprunghafte Änderungen der Wellenlänge, deren Auftreten nicht vorhergesagt werden kann, sondern zufällig erfolgt. Die Wellenlänge ändert sich sprunghaft um einen geringfügigen Betrag. Wenn zwischen zwei aufeinanderfolgenden Bildern bzw. Phasenbildern ein derartiger Modensprung auftritt, liegt ein gestörtes Bild bzw. Phasenbild bzw. eine gestörte Differenz vor, und die Auswertung wird ebenfalls gestört. Um den durch den Modensprung oder auf andere Weise hervorgerufenen Fehler zu beseitigen, kann das Bild bzw. Phasenbild bzw. die Differenz bei der Auswertung weggelassen werden.

Das gestörte Bild bzw. Phasenbild bzw. die daraus gebildete Differenz kann vernachlässigt werden. Bei einer hinreichend schnellen Einzelbildfolge kann der hierdurch hervorgerufene Fehler vernachlässigbar sein.

Es ist allerdings auch möglich, die durch das gestörte Bild bzw. Phasenbild bzw. die gestörte Differenz verursachte Lücke durch die vorangegangene und/oder nachfolgende Differenz zu schließen. Dies ist insbesondere bei im wesentlichen linearen Verformungen möglich bzw. dann, wenn die Bildfolge so hoch ist, daß zwischen aufeinanderfolgenden Bildern näherungsweise lineare Verhältnisse vorliegen. In diesem Fall wird die zu dem gestörten Bild bzw. Phasenbild gehörende Verformung aus den Nachbarzeitabständen extrapoliert. Für das ausgefallene Intervall werden die vorangegangene Differenz und/oder die nachfolgende Differenz herangezogen.

Um auch bei dem Ausfall eines Bildes bzw. Phasenbildes eine Auswertung durchführen zu können, sollte die Auflösung derart gewählt werden, daß eine sichere Unterscheidung der Interferenzlinien oder Projektionslinien auch dann noch möglich ist, wenn ein Bild ausfällt. Der theoretische Mindestabstand zwischen zwei benachbarten Linien beträgt zwei Pixel. Um eine zuverlässige Auswertung zu gewährleisten, sollte allerdings der Abstand zwischen zwei benachbarten Linien mindestens vier oder fünf Pixel betragen. Dann können die Linien auch dann noch sicher unterschieden werden, wenn ein Bild bzw. Phasenbild ausfällt.

Die aufgenommenen Bilder bzw. Phasenbilder können als Film visualisiert werden.

Es ist möglich, beliebige Zeitabschnitte der Verformung miteinander zu vergleichen.

Die der Erfindung zugrundeliegende Aufgabe wird bei einer Vorrichtung zur Erfassung der Verformung von Objekten gelöst durch eine Meßeinrichtung zur Aufnahme einer Folge von Bildern des Objekts während der Verformung des Objekts und durch eine Auswerteeinrichtung zum Bilden der Differenz zwischen zwei aufeinanderfolgenden Bildern und zum Aufaddieren der Differenz.

Vorteilhafte Weiterbildungen der erfindungsgemäßen Vorrichtung sind in den weiteren Unteransprüchen beschrieben.

Ein Ausführungsbeispiel der Erfindung wird nachstehend anhand der beigefügten Zeichnung im einzelnen erläutert. In der Zeichnung zeigt
- Fig. 1: eine Meßeinrichtung und ein Objekt in einer schematischen Darstellung und
- Fig. 2: die Bildung von Differenzen zwischen aufeinanderfolgenden Phasenbildern.

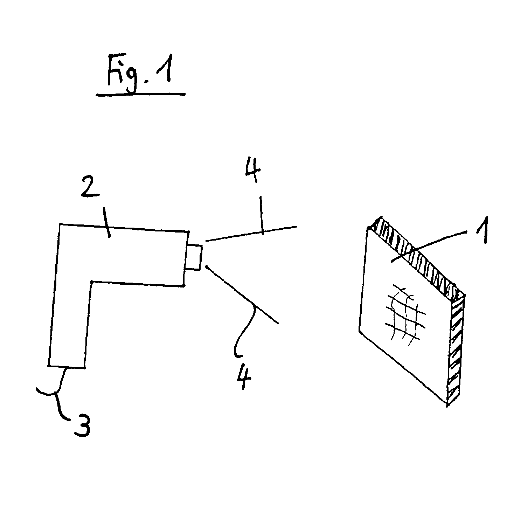

Wie in Fig. 1 dargestellt wird ein Objekt 1, z.B. ein Reifen oder ein Verbundwerkstoff, mit einem Meßkopf 2 laufend beobachtet. Das Objekt 1 wird verformt, z.B. durch Druck, Unterdruck, Wärme oder dergleichen. Der Meßkopf 2 kann von Hand gehalten werden. Er ist über eine Leitung 3 mit einem Auswertegerät, z.B. einem PC oder sonstigen Computer, verbunden.

Bei dem Meßkopf kann es sich um ein Gerät handeln, das nach dem in der EP 419 936 B1 beschriebenen Verfahren arbeitet. Der Meßkopf 2 weist Laserdioden auf, die das Objekt 1 mit Laserlicht 4 bestrahlen.

Durch den Meßkopf 2 werden laufend Bilder des Objekts 1 aufgenommen. Dies geschieht während der Verformung des Objekts 1. Zur Aufnahme der Bilder ist in dem Meßkopf 2 ein CCD-Sensor vorhanden. Die Bilder werden mit einer Frequenz von 1000 Vollbildern pro Sekunde aufgenommen. Diese Frequenz ist im allgemeinen ausreichend, wenn der Meßkopf 2 von Hand gehalten wird. Dabei ist darauf zu achten, daß die Verschiebung zwischen zwei aufeinanderfolgenden Bildern nicht größer sein soll als ein Mikrometer. Dies kann bei von Hand gehaltenen Meßköpfen im Allgemeinen durch eine Frequenz von 1000 Vollbildern pro Sekunde erreicht werden. Falls der Meßkopf 2 feststehend montiert wird, können wesentlich geringere Bildfrequenzen verwendet werden. Die Bilder können dann mit Videotaktfrequenz (25 Vollbilder pro Sekunde) aufgenommen werden oder auch- je nach Anwendungsfall - mit einer kleineren oder größeren Frequenz.

Aus den Bildern werden ständig Phasenbilder berechnet. Dies erfolgt vorzugsweise in 1-Bild-Technik. Aus jedem Bild wird also ein Phasenbild berechnet. Dies kann nach dem Verfahren geschehen, das in der EP 419 936 B1 beschrieben ist. Eine Aufnahme des Objekts 1 im Ruhezustand ist nicht erforderlich.

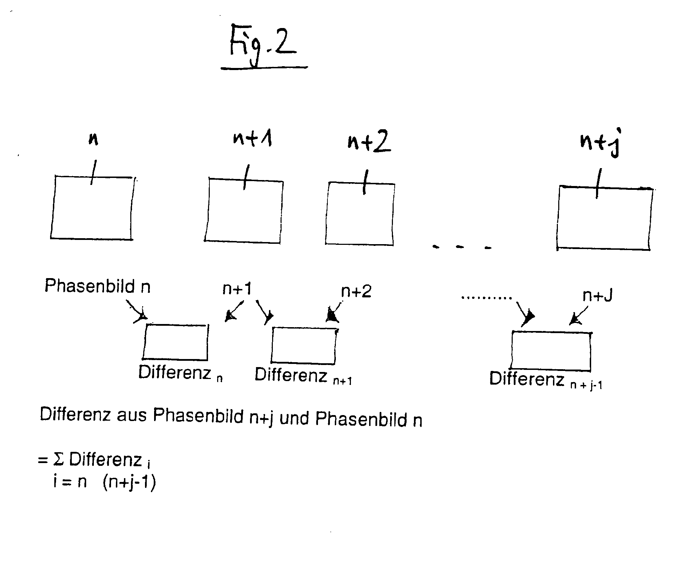

Die Differenzen aufeinanderfolgender Phasenbilder beschreiben die Verformung zwischen jeweils zwei Aufnahmezeitpunkten. Dies ist in Fig. 2 schematisch dargestellt. Die Verformung zwischen zwei beliebigen Aufnahmezeitpunkten errechnet sich aus der 2 π-modulierten Summe der Differenzen aller dazwischen liegenden Aufnahmen.

Wie in Fig. 2 gezeigt, wird die Differenz n aus der Differenz zwischen dem nachfolgenden Phasenbild n + 1 und dem vorangegangenen Phasenbild n gebildet. Die Differenz n + 1 wird aus dem dann nachfolgenden Phasenbild n + 2 und dem dann vorangegangenen Phasenbild n + 1 gebildet, und so weiter. Die Differenzen werden ferner laufend aufaddiert. Aus der Summe der aufaddierten Differenzen ergibt sich die Gesamtverformung.

Zu jeder Aufnahme (jedem Bild bzw. Phasenbild) kann eine Serie von Verformungsbildern berechnet werden durch Berechnung der Summe aller n nachfolgenden Verformungen (n = 1, 2, 3 ...). Dadurch kann die Veformung als Film bzw. in einer Art Film visualisiert werden.

Beliebige Teilabschnitte einer Verformung können einzeln betrachtet werden. Dies kann insbesondere dann sinnvoll sein, falls durch eine begrenzte laterale Auflösung des Meßkopfes die gesamte Verformung nicht darstellbar ist bzw. falls die Streifendichte größer ist als die Pixelauflösung.

Störungen innerhalb der Verformung können unterdrückt bzw. überbrückt werden. Wenn eine Bildstörung zwischen zwei Aufnahmezuständen auftritt, beispielsweise durch einen Modensprung der Beleuchtung, durch Wärmeschlieren, durch eine Bauteil- und/oder Meßkopfverkippung, wird die Störung bei der Auswertung nicht berücksichtigt. Dies kann dadurch geschehen, daß die Differenz aus den beiden zugehörigen Bildern bzw. Phasenbildern, zwischen denen die Störung stattgefunden hat, nicht zu der Summe der Differenzen addiert wird, wodurch die Störung im Ergebnisbild unterdrückt wird. Diese Vorgehensweise ermögliche u.a. den Einsatz von Laserdioden anstatt teurer Laser bei vielen Meßaufgaben. Die Verformung während des unterdrückten Zeitraumes kann bei hinreichend schneller Einzelbildfolge vernachlässigt werden. Bei linearen Verformungen bzw. bei Verformungen, die mit hinreichender Näherung als linear betrachtet werden können, kann die Verformung während des unterdrückten Zeitraumes aus den Nachbarzeitabständen extrapoliert werden.

Die zu unterdrückenden Störungen können innerhalb der Serie von Verformungsbildern manuell oder automatisch detektiert werden.

In der zerstörungsfreien Werkstoffprüfung ist häufig der eigentlich untersuchten, atypischen Werkstückverformung eine typische "Ganzkörperverformung" überlagert. In vielen Fällen ist das Maß dieser Ganzkörperverformung deutlich größer als das des gesuchten Fehlers im Objekt. Dadurch ist es oft unmöglich, den Fehler zu visualisieren, weil die überlagerte globale Verformung bereits die Dynamik der Meßanordnung überschreitet, bevor sich der gesuchte Fehler deutlich ausprägen kann.

Um auch derartige "überdeckte" Fehler sichtbar machen zu können, kann eine globale Ausgleichsfläche von jeder Einzeldifferenz subtrahiert werden und können die korrigierten Einzeldifferenzen dann aufsummiert werden.

Zusätzlich können in manchen Anwendungen unerwünschte Verformungen separat erfaßt und von der Kombination aus erwünschter und unerwünschter Verformung, die aufgenommen wird, subtrahiert werden.

Dies sei anhand eines Beispiels erläutert, bei dem Reifen mit Fehlern in eine Unterdruckkammer eingebracht werden. Die Fehler vergrößern sich während der Absenkung des Druckes in der Unterdruckkammer. Sie können mit Shearografie sichtbar gemacht werden. Die durch die Fehler hervorgerufene Verformung ist die "erwünschte" Verformung, die ermittelt und sichtbar gemacht werden soll. Die Reifen pflegen nach einer Deformation, die z.B. durch das Einbringen in die Prüfkammer hervorgerufen werden kann, langsam wieder ihre ursprüngliche Form anzunehmen. Hierbei handelt es sich um die "unerwünschte Ganzkörperverformung", die der eigentlich zu untersuchenden, atypischen, erwünschten Verformung überlagert ist. Bei der Prüfung von Reifen ist diese Ganzkörperverformung vom beaufschlagten Unterdruck weitgehend unabhängig.

Durch das erfindungsgemäße Messen der Verformung während einer Unterdruckänderung wird-die aus erwünschter und unerwünschter Komponente kombinierte Gesamtverformung gemessen. Durch eine Messung (Referenzmessung) ohne Unterdruckänderung kann die unerwünschte Komponente (unerwünschte Ganzkörperverformung) ermittelt werden. Durch Subtrahieren der unerwünschten Verformung von der kombinierten Gesamtverformung kann die erwünschte Komponente der Verformung erhalten werden.

Dabei wird vorausgesetzt, daß die beiden Messungen unmittelbar nacheinander erfolgen und jeweils so lange dauern, bis der Anteil der unerwünschten Verformung in beiden Fällen gleich groß ist. Ersatzweise können auch die Ergebnisse, z.B. entsprechend der gesamten Zeitdifferenz der Einzelverformungen, normiert werden, um den gleichen Anteil der unerwünschten Verformungskomponente zu erreichen, bevor diese von der kombinierten Gesamtverformung abgezogen wird.

Dementsprechend ist eine vorteilhafte Weiterbildung der Erfindung dadurch gekennzeichnet, daß die Ganzkörperverformung von der Gesamtverformung subtrahiert wird. Auf diese Weise wird die erwünschte Verformung erhalten. Eine weitere vorteilhafte Weiterbildung ist dadurch gekennzeichnet, daß unerwünschte Verformungen von der Gesamtverformung subtrahiert werden. Die unerwünschten Verformungen werden dabei vorzugsweise aus Referenzmessungen ermittelt. Die Referenzmessungen können ohne Ausprägung der gewünschten Verformung durchgeführt werden.

Vorteilhaft ist es, wenn die Subtraktion der Ganzkörperverformung bzw. unerwünschten Verformung von der Gesamtverformung in den Bildern bzw. Phasenbildern vor dem Bilden der Summe der Differenzen zwischen den Bildern bzw. Phasenbildern erfolgt. Durch eine Subtraktion der Ganzkörperverformung in den Einzeldifferenzbildern vor dem Aufsummieren zur Gesamtverformung kann die Meßdynamik erhöht werden. Vorzugsweise findet eine Subtraktion von unerwünschten Verformungen, die aus Referenzmessungen ohne Ausprägung der gewünschten Verformung ermittelt werden, statt.

## Patentansprüche

1. Verfahren zur Erfassung der Verformung von Objekten (1),
bei dem während der Verformung des Objekts (1) eine Folge von Bildern des Objekts (1) mit einem Meßverfahren aufgenommen wird,
die Differenz zwischen zwei aufeinanderfolgenden Bildern (n, n + 1, n + 2) gebildet wird
und diese Differenz dem ersten Bild hinzuaddiert wird.

2. Verfahren nach Anspruch 1, **dadurch gekennzeichnet, daß** die Bilder des Objekts (1) mit einem Interferometrie-Verfahren aufgenommen werden, vorzugsweise mit holografischer Interferometrie oder elektronischer Speckle-Pattern-Interferometrie (ESPI) oder mit Speckle-Shearing-Interferometrie.

3. Verfahren nach Anspruch 1, **dadurch gekennzeichnet, daß** die Bilder des Objekts (1) mit einer Projektionsverfahren aufgenommen werden, vorzugsweise mit einem Gitterprojektionsverfahren oder mit einem Moiré-Verfahren.

4. Verfahren nach einem der vorhergehenden Ansprüche, **dadurch gekennzeichnet, daß** aus den Bildern Phasenbilder ermittelt werden.

5. Verfahren nach Anspruch 4, **dadurch gekennzeichnet, daß** das Phasenbild aus einem Bild ermittelt wird.

6. Verfahren nach einem der vorhergehenden Ansprüche, **dadurch gekennzeichnet, daß** das Objekt (1) mit kohärenter Strahlung bzw. kohärentem Licht, insbesondere Laserlicht, oder mit teilkohärenter Strahlung bzw. teilkohärentem Licht bestrahlt wird.

7. Verfahren nach einem der vorhergehenden Ansprüche, **dadurch gekennzeichnet, daß** das Objekt von einer Laserdiode bestrahlt wird.

8. Verfahren nach einem der Ansprüche 1 bis 6, **dadurch gekennzeichnet, daß** das Objekt von mehreren Laserdioden bestrahlt wird.

9. Verfahren nach Anspruch 8, **dadurch gekennzeichnet, daß** sich die Ausleuchtungsbereiche der Laserdioden nicht überlappen.

10. Verfahren nach Anspruch 8, **dadurch gekennzeichnet, daß** die Ausleuchtungsbereiche der Laserdioden überlappen.

11. Verfahren nach einem der vorhergehenden Ansprüche, **dadurch gekennzeichnet, daß** die Bilder bzw. Phasenbilder des Objekts von einem handgehaltenen Sensor (2) aufgenommen werden.

12. Verfahren nach einem der vorhergehenden Ansprüche, **dadurch gekennzeichnet, daß** ein gestörtes Bild bzw. Phasenbild oder die Differenz, die daraus gebildet wird, bei der Auswertung nicht berücksichtigt wird.

13. Verfahren nach Anspruch 12, **dadurch gekennzeichnet, daß** das gestörte Bild bzw. Phasenbild bzw. die daraus gebildete Differenz vernachlässigt wird.

14. Verfahren nach Anspruch 12, **dadurch gekennzeichnet, daß** die durch das gestörte Bild bzw. Phasenbild bzw. die gestörte Differenz verursachte Lücke durch die vorangegangene und/oder nachfolgende Differenz geschlossen wird.

15. Verfahren nach einem der vorhergehenden Ansprüche, **dadurch gekennzeichnet, daß** die aufgenommenen Bilder bzw. Phasenbilder bzw. die daraus gebildeten Differenzen als Film visualisiert werden.

16. Verfahren nach einem der vorhergehenden Ansprüche, **dadurch gekennzeichnet, daß** Zeitabschnitte bzw. Teilabschnitte der Verformung miteinander verglichen werden.

17. Verfahren nach einem der vorhergehenden Ansprüche, **dadurch gekennzeichnet, daß** die Ganzkörperverformung bzw. eine unerwünschte Verformung von der Gesamtverformung substrahiert wird.

18. Verfahren nach Anspruch 17, **dadurch gekennzeichnet, daß** die unerwünschte Verformung aus einer Referenzmessung ermittelt wird.

19. Verfahren nach Anspruch 17 oder 18, **dadurch gekennzeichnet, daß** die Subtraktion der Ganzkörperverformung bzw. unerwünschten Verformung von der Gesamtverformung in den Bildern bzw. Phasenbildern vor dem Bilden der Summe der Differenzen zwischen den Bildern bzw. Phasenbildern erfolgt.

20. Vorrichtung zur Erfassung der Verformung von Objekten (1) mit einer Meßeinrichtung (2) zur Aufnahme einer Folge von Bildern des Objekts (1) während der Verformung des Objekts, und mit einer Auswerteeinrichtung zum Bilden der Differenz zwischen zwei aufeinanderfolgenden Bildern und zum Aufaddieren der Differenz.

21. Vorrichtung nach Anspruch 20, **dadurch gekennzeichnet, daß** die Meßeinrichtung eine Interferometrie-Einrichtung aufweist.

22. Vorrichtung nach Anspruch 20, **dadurch gekennzeichnet, daß** die Meßeinrichtung eine Projektionseinrichtung aufweist.

23. Vorrichtung nach einem der Ansprüche 20 bis 22, **gekennzeichnet durch** eine Einrichtung zum Ermitteln von Phasenbildern aus den aufgenommenen Bildern.

24. Vorrichtung nach einem der Ansprüche 20 bis 23, **dadurch gekennzeichnet, daß** die Meßeinrichtung eine Quelle für kohärente Strahlung bzw. kohärentes Licht oder teilkohärente Strahlung bzw. teilkohärentes Licht umfaßt.

25. Vorrichtung nach einem der Ansprüche 20 bis 24, **gekennzeichnet durch** eine oder mehrere Laserdioden.

26. Vorrichtung nach einem der Ansprüche 20 bis 25, **gekennzeichnet durch** einen handgehaltenen Sensor.

27. Vorrichtung nach einem der Ansprüche 20 bis 26, **gekennzeichnet durch** eine Einrichtung zum Visualisieren der aufgenommenen Bilder bzw. Phasenbilder als Film.
